# EUROPEAN PATENT SPECIFICATION

(11) **EP 0 359 694 B1**
(45) Date of publication and mention of the grant of the patent: **13.10.1993**
(21) Application number: 89630146.2
(22) Date of filing: 08.09.1989
(51) Int. Cl.: C08L 9/00, C08L 7/00, B60C 9/18

(54) **Pneumatic tire containing syndiotactic 1,2-polybutadiene**
Luftreifen, welcher syndiotaktisches 1,2-Polybutadien enthält
Bandage pneumatique contenant de polybutadiène 1,2-syndiotactique

(30) Priority: 14.09.1988 US 243967
(43) Date of publication of application: 21.03.1990
(73) Proprietor: THE GOODYEAR TIRE & RUBBER COMPANY, Akron, Ohio 44316-0001 (US)
(72) Inventor: Scriver, Richard Martin, Atwater Ohio 44201 (US); Hsu, Wen-Liang, Copley Ohio 44321 (US); Halasa, Adel Farhan, Bath Ohio 44210 (US)
(74) Representative: Leitz, Paul

(56) References cited:
- US-A- 4 215 021
- DATABASE WPIL, no. 81-76418D [42], Derwent Publications Ltd, London, GB; & JP-A-56 109 205 (JAPAN SYNTHETIC RUBBER) 29-08-1981
- PATENT ABSTRACTS OF JAPAN, vol. 3, no. 157 (C-68), 22nd December 1979, page 64 C 68; & JP-A-54 132 646 (BRIDGESTONE TIRE K.K.) 15-10-1979

## Description

### Background of the Invention

Pneumatic tires are sometimes constructed with a circumferential belt reinforcement positioned in their crown portion between tread and carcass. Such construction is often used with radial ply carcass tires and sometimes with bias ply tires.

The belt is typically a fabric-reinforced rubber in the form of a rubber encapsulated textile fabric, or multiple filament, such as steel, glass, nylon, aramid or polyester.

The belt reinforcement is used, for example, to control or limit the outward expansion or deformation of the tire in service, to provide some stability for the overall tire construction and to aid in providing a strengthening interface between the carcass plies and tread rubber.

Another and important purpose is to limit the distortion, or squirming, of the tread element as the tire rotates across a substrate (the ground or pavement, for example) and the tread passes through its footprint against the substrate. At this point of contact, a considerable and continuing flexing and distortion of the tire is observed in the region of the footprint. Belt reinforcement resists such distortion at the footprint which usually results in better tread wear characteristics.

High performance tires typically also have one or more overlay layers which are positioned between the belt reinforcement and the tread. Such overlay layers can be made utilizing a wide variety of materials with nylon being among tee most common. Such overlay layers improve the tire's performance characteristics but are expensive to apply and add significantly to the cost of the tire.

### Summary of the Invention

By utilizing the techniques of this invention, the high speed performance of tires can be greatly improved. In fact by utilizing the technique of this invention, it is possible to eliminate overlay layers from tires without sacrificing performance characteristics. The present invention more specifically deals with the use of syndiotactic 1,2-polybutadiene (SPBD) in and around the edges of the belt plies as a gum strip, as an undertread layer (tread cushion), and in the rubber composition utilized in fabric reinforced belts.

The subject invention more specifically discloses a pneumatic rubber tire comprised of a toroidal shaped fabric-reinforced rubber carcass and an outer circumferential rubber tread, two spaced substantially inextensible beads and two sidewalls extending radially from and connecting said tread to said beads, said tire characterized by having a circumferential fabric reinforced rubber belt positioned between said tread and supporting carcass where the rubber of said belt is comprised of (A) from 25 to 75 weight percent of a highly dispersed blend of syndiotactic 1,2-polybutadiene in synthetic polyisoprene, wherein said highly dispersed blend contains from 5 weight percent to 40 weight percent syndiotactic 1,2-polybutadiene, and wherein said highly dispersed blend was made by inverse phase polymerization, (B) from 25 to 75 weight percent natural rubber, and (C) from 0 to 40 weight percent polydiene rubbers other than natural rubber.

The subject invention also reveals a pneumatic tire comprised of a toroidal shaped fabric-reinforced rubber carcass and an outer circumferential rubber tread, two spaced substantially inextensible beads and two sidewalls extending radially from and connecting said tread to said beads, said tire characterized by having a circumferential fabric reinforced rubber belt positioned between said tread and supporting carcass and an undertread gum layer positioned between said tread and said belt where the undertread gum layer is comprised of (A) from 25 to 75 weight percent of a highly dispersed blend of syndiotactic 1,2-polybutadiene in polyisoprene, wherein said highly dispersed blend contains from 5 weight percent to 40 weight percent syndiotactic 1,2-polybutadiene, and wherein said highly dispersed blend was made by inverse phase polymerization, (B) from 25 to 75 weight percent natural rubber, and (C) from 0 to 40 weight percent polydiene rubbers other than natural rubber.

The present invention further reveals a pneumatic rubber tire comprised of a toroidal shaped fabric-reinforced rubber carcass and an outer circumferential rubber tread, two spaced substantially inextensible beads and two sidewalls extending radially from and connecting said tread to said beads, said tire characterized by having a circumferential fabric reinforced rubber belt positioned between said tread and supporting carcass with gum strips around the edges of the belts where the gum strips are comprised of (A) from 25 to 75 weight percent of a highly dispersed blend of syndiotactic 1,2-polybutadiene in synthetic polyisoprene, wherein said highly dispersed blend contains from 5 weight percent to 40 weight percent syndiotactic 1,2-polybutadiene, and wherein said highly dispersed blend was made by inverse phase polymerization, (B) from 25 to 75 weight percent natural rubber, and (C) from 0 to 40 weight percent polydiene rubbers other than natural rubber.

### Detailed Description of the Invention

The syndiotactic 1,2-polybutadiene (SPBD) used in the practice of the subject invention normally has more than 70% of its monomeric units in a syndiotactic 1,2-configuration. In most cases the SPBD used in the practice of this invention will have at least 90% of its monomeric units in the syndiotactic 1,2-configuration. The SPBD will generally have a melting point of at least 160°C. In most cases, it is preferable for the SPBD to have a melting point of at least 180°C and it is more preferable for the SPBD to have a melting point of at least 200°C. It is very important for the SPBD to be highly dispersed throughout the rubbers with which it is being compounded. Highly dispersed blends of SPBD throughout rubbery elastomers can be prepared by utilizing inverse phase polymerization. Such blends of SPBD with the rubbery elastomer can then be further compounded to obtain rubber blends which are useful in the practice of this invention. European Patent Application No. 89630043.1 (Publication Number 0 336 874) reveals a process for preparing a highly dispersed blend of syndiotactic 1,2-polybutadiene in a rubbery elastomer (synthetic polyisoprene) which comprises (1) polymerizing 1,3-butadiene monomer in an organic solvent under conditions and in the presence of a catalyst which results in the formation of a polymer cement of the syndiotactic 1,2-polybutadiene in the organic solvent, (2) polymerizing at least one diene monomer (isoprene) in the polymer cement under conditions and in the presence of a catalyst which results in the formation of the rubbery elastomer to produce a rubber cement having syndiotactic 1,2-polybutadiene dispersed therein, and (3) recovering the highly dispersed blend of the syndiotactic 1,2-polybutadiene in the rubbery elastomer from the organic solvent in the rubber cement. The inverse phase polymerization technique disclosed in European Patent Application No. 89630043.1 (Publication Number 0 336 874) is incorporated by reference herein in its entirety. The highly dispersed blends of SPBD in synthetic polyisoprene made by inverse phase polymerization may actually be composites or graft copolymers.

Highly dispersed blends of SPBD in rubbery elastomers can also be prepared utilizing SPBD latex as the polymerization medium for producing emulsion rubbers. Such highly dispersed blends can also be prepared by mixing SPBD latex with the latex of a rubbery elastomer prior to coagulation. The coagulation of such blended latices results in the formation of a highly dispersed blend of SPBD throughout the rubbery elastomer. Such techniques are disclosed in United States Patent 4,902,741, which is incorporated herein by reference in its entirety.

The highly dispersed blends of SPBD with synthetic polyisoprene made by inverse phase polymerization or another suitable technique will typically contain from 5 weight percent to 40 weight percent SPBD, based upon the total weight of the rubber/SPBD blend. Such blends will preferably contain from 12 to 25 weight percent SPBD and will more preferably contain from 16 weight percent to 20 weight percent SPBD. Such blends can then be mixed with additional rubbers to make the SPBD containing rubber compounds utilized in accordance with this invention.

The SPBD containing rubber compounds utilized in accordance with this invention will typically contain from 25 weight percent to 75 weight percent natural rubber. It is preferable for such rubber compounds to contain from 30 weight percent to 70 weight percent natural rubber with compounds contain from 40 weight percent to 60 weight percent natural rubber being most preferred. Such rubber compounds can additionally contain up to 40 weight percent general purpose rubbers, such as polydiene rubbers other than natural rubber. Such polydiene rubbers are derived from conjugated diene monomers and/or nonconjugated diene monomers. Such conjugated and nonconjugated diene monomers typically contain from 4 to 12 carbon atoms and preferably contain from 4 to 8 carbon atoms. Some representative examples of suitable diene monomers include 1,3-butadiene, isoprene, 2,3-dimethyl-1,3-butadiene, 2-methyl-1,3-pentadiene,3,4-dimethyl-1,3-hexadiene, and the like. Such polydiene rubbers can also contain various vinyl aromatic monomers, such as styrene, 1-vinylnaphthalene, 2-vinylnaphthalene, α-methylstyrene and the like. Some representative examples of suitable polydiene rubbers include cis-1,4-polybutadiene, medium vinylpolybutadiene, styrene-butadiene rubber (SBR), synthetic polyisoprene, isoprene-butadiene rubber, isoprene-butadiene-styrene rubber, and nitrile rubber.

The SPBD containing rubber compounds utilized in building tires in accordance with this invention are typically prepared by mixing a highly dispersed blend of SPBD throughout a rubber prepared by inverse phase polymerization with additional desired rubbers, including natural rubber. Such a mixing procedure can be carried out utilizing standard mixing techniques, such as mixing in a Banbury mixer or a mill mixer. Typically, from 25 weight percent to 75 weight percent of the highly dispersed blend of SPBD in the rubbery elastomer will be mixed throughout from 25 weight percent to 75 weight percent of the natural rubber. For instance, a blend containing 18 weight percent SPBD and 82 weight percent synthetic polyisoprene could be mixed with natural rubber utilizing a 1:1 ratio to produce a blend containing 9 weight percent SPBD in synthetic polyisoprene and natural rubber.

In the practice of this invention, the SPBD containing rubber compounds utilized in building tires will also contain conventional compounding ingredients such as carbon black, sulfur, accelerators, antidegradants, zinc oxide, processing oil and fatty acids and/or metal salts thereof, such as stearic acid or zinc stearate. For instance, such a SPBD containing rubber composition might include from 0 to 10 phr processing oil, from 20 to 70 phr of carbon black, from 2 to 10 phr of zinc oxide, from 1 to 5 phr of fatty acids, from 0.5 to 2 phr of cure accelerators, and from 0.5 to 5 phr of sulfur. The term "phr" refers to parts by weight of the specified material or ingredient per 100 parts by weight of rubber. For purposes of this patent application, SPBD is assumed to be rubber even though it is actually a thermoplastic polymer.

Tires manufactured in accordance with this invention are built utilizing standard building techniques. Additionally, tires manufactured utilizing SPBD containing rubber compounds are cured in a conventional manner. The tires of this invention are comprised of a toroidal shaped fabric reinforced rubber carcass and an outer circumferential rubber tread, two spaced substantially inextensible beads and two sidewalls extending radially from and connecting said tread to said beads, said tire characterized by having a circumferential fabric reinforced rubber belt positioned between said tread and supporting carcass. However, these tires include one or more SPBD containing rubber compounds. The tire components in which SPBD containing rubber compounds can be utilized in accordance with this invention include gum strips around the edges of the belts, an undertread gum layer and the rubber utilized in preparing the fabric reinforced belt. SPBD containing gum strips are typically applied on the top of the edges of the first belt ply which is the most inwardly located belt ply (located closest the carcass and farthest from the tread). Such gum strips can be situated in and around the edges of the belt plies as gum layer. Belts made utilizing SPBD containing compounds are in all other respects conventional. Undertread gum layers made utilizing SPBD containing compounds are also prepared and built into the tire utilizing conventional techniques. The thickness of such undertread gum layers can vary considerably. However, such undertread gum layers will typically have a thickness which is within the range of 0.005 inches (0.127 mm) to 0.2 inches (5.08 mm). The undertread gum layer will preferably have a thickness of 0.01 (0.254 mm) to 0.05 inches (1.27 mm) and will more preferably have a thickness which is within the range of 0.015 inches (0.381 mm) to 0.03 inches (0.762 mm).

The tire can be built, shaped, molded and cured by various methods which will be readily apparent to those having skill in the art.

The tread rubber is typically a sulfur vulcanized high unsaturation diene rubber, or blend thereof. Representative of such high unsaturation rubbers, are natural rubber and synthetic rubbery polymers of cis 1,4-polyisoprene, cis 1,4-polybutadiene, vinyl 1,2-polybutadiene, styrene/1,3-butadiene copolymer and medium vinyl styrene/1,3-butadiene copolymer rubber.

The styrene/1,3-butadiene rubber can be of the aqueous emulsion polymerization or the hydrocarbon solvent solution polymerization derived types and conventionally contains 5 to 15, usually 8 to 12 percent vinyl 1,2-content. The medium vinyl styrene/1,3-butadiene rubber contains 15 to 50, preferably 20 to 45 percent vinyl 1,2-content of the type usually prepared by solution polymerizing the monomers in the presence of a polar modifier.

The supporting carcass rubber is typically at least one sulfur vulcanized high unsaturation diene rubber, or blend thereof. Representative of such rubbers are natural rubber (cis-1,4-polyisoprene), cis 1,4-polybutadiene and styrene/butadiene rubber.

The belt can typically be applied in the building of the green tire in which the uncured belt is built prior to the tread member following which the green tire is shaped and cured.

It is understood that the tire carcass rubber, which supports the tread may contain filament reinforcement and additives to enhance rubber adhesion to the filaments. Such filaments can be selected from at least one of metal, organic and inorganic filaments and are conventionally in the form of a twisted cable, or cord, of a multiple of such filaments.

The term "pneumatic tire" is used herein to refer to tires of both the pneumatic and semi-pneumatic type. Conventionally, pneumatic tires rely upon an internal air pressure to maintain its shape when mounted on a rim and placed under load, whereas a semi-pneumatic tire, although containing a gas such as air which might be under pressure in the tire cavity, does not completely rely upon the gas for support of the tire itself.

The practice of this invention is further illustrated by reference to the following examples which are intended to be representative rather than restrictive of the scope of the invention. Unless otherwise indicated, all parts and percentages are by weight.

### Examples 1 and 2

In this experiment a standard coat/belt stock was prepared (Example 1) and compared with a similar coat/belt stock which was made utilizing a rubber compound containing SPBD. The standard coat/belt compound made in Example 1 was comprised of 100 parts natural rubber, about 65 parts of fillers, about 1 part of accelerator, about 5 parts of sulfur and about 1 part of antioxidant. The compounded rubber made was cured utilizing standard techniques and tested for mechanical properties. The mechanical properties of the cured rubber is reported in Table I.

In Example 2 a highly dispersed blend containing 18 weight percent SPBD and 82 weight percent synthetic polyisoprene was prepared by inverse phase polymerization. Fifty parts of the SPBD/polyisoprene blend was mixed with 50 parts of natural rubber. The blend made accordingly contained 9 weight percent SPBD which was dispersed throughout the natural rubber and synthetic polyisoprene. It was compounded and cured utilizing the same procedure as was carried out in Example 1. The physical properties of the cured SPBD containing blend are reported in Table I. be under pressure in the tire cavity, does not completely rely upon the gas for support of the tire itself.

The practice of this invention is further illustrated by reference to the following examples which are intended to be representative rather than restrictive of the scope of the invention. Unless otherwise indicated, all parts and percentages are by weight.

### Examples 1 and 2

In this experiment a standard coat/belt stock was prepared (Example 1) and compared with a similar coat/belt stock which was made utilizing a rubber compound containing SPBD. The coat/belt compound made in Example 1 was comprised of 100 parts natural rubber, about 65 parts of fillers, about 1 part of accelerator, about 5 parts of sulfur and about 1 part of antioxidant. The compounded rubber made was cured utilizing standard techniques and tested for mechanical properties. The mechanical properties of the cured rubber is reported in Table I.

In Example 2 a highly dispersed blend containing 18 weight percent SPBD and 82 weight percent synthetic polyisoprene was prepared by inverse phase polymerization. Fifty parts of the SPBD/polyisoprene blend was mixed with 50 parts of natural rubber. The blend made accordingly contained 9 weight percent SPBD which was dispersed throughout the natural rubber and synthetic polyisoprene. It was compounded and cured utilizing the same procedure as was carried out in Example 1. The physical properties of the cured SPBD containing blend are reported in Table I.

**Table I**

| Example | 1 | 2 |
|---|---|---|
| Modulus MPa | 3.0 | 6.4 |
| Tensile Strength MPa | 23 | 19 |
| Elongation % | 475 | 320 |
| Rebound (Avg.) % | 62 | 56 |
| Bending Stiffness (5% Strain) | 23 | 58 |
| Cut Growth (Demattia) mm | 17 | 3 |
| Rheometer, Maximum Torque | 70 | 95 |

As can be seen by reviewing Table I, the modulus of the coat/belt compound was greatly improved by incorporating SPBD therein. A tremendous improvement in cut growth was also observed. The coat growth reported in the average cut growth for a test period of 240 minutes as measured utilizing ASTM D813. An excellent increase in bending stiffness was also achieved by incorporating the SPBD into the rubber compound. Some loss in tensile strength, elongation, and average rebound was observed. However, the loss of tensile strength, elongation and rebound were all well within acceptable limits.

This experiment clearly shows that SPBD containing compounds have an excellent combination of physical properties for utilizing in undertread gum layers, gum strips for utilization in and around the edges of belt plies, and in belts.

### Example 3

In this experiment, the procedure utilized in Example 2 was repeated except that the SPBD utilized was made by suspension polymerization and ground to a small particle size. The small particle size SPBD was then blended by mechanical mixing into the rubber. After curing, a modulus of 4.5 MPa was achieved. This experiment clearly shows that superior results are attained when the SPBD is prepared utilizing inverse phase polymerization.

### Example 4

In this experiment a P195/75R14 tire of the Vector-design was built utilizing standard procedures except that an undertread gum layer having a thickness of 0.015 inches was utilized in place a standard nylon overlay. The undertread gum layer was prepared utilizing the procedure described in Example 2. The tire built utilizing the undertread gum layer in lieu of the nylon overlay proved to be satisfactory in all respects. In fact, the tire built utilizing the SPBD containing undertread gum layer compared very favorably in high speed testing to standard tires which contain the conventional nylon overlay.

The tires built were tested to failure on a dynamometer. In the test procedure utilized, the tires were rotated at an equivalent speed of about 99 miles per hour (159 km per hour) for 10 minutes. The speed at which the tires were rotated was increased by 6.2 miles per hour (10 kilometers per hour) every 10 minutes. The tires failed at a speed of about 137 miles per hour (220 km per hour). This compares very favorably to standard tires of the same design containing a standard nylon overlay which typically fail at speeds of less than 137 miles per hour (220 km per hour). For instance, three standard tires were tested and two of them failed at a speed of 130 miles per hour (209 km per hour).

This example shows that undertread gum layers which are comprised of SPBD containing rubber compounds can be utilized in lieu of overlays in building high performance tires. By eliminating the overlay, very significant cost savings can be realized. These savings are attributable to lower labor costs and lower material costs.

### Example 5

This experiment was conducted to show that improved performance can be realized by utilizing SPBD containing rubber compounds in gum strips, an undertread gum layer, and in belt rubber. In the procedure utilized, P225/60VR16 tires of the Eagle GT+4® design were built. However, overlays were not included in the tires but the SPBD rubber composition made by the process specified in Example 2 was utilized in preparing gum strips which were applied to the top of the edges of the first belt ply. The tires built utilizing this procedure failed in the high speed test described in Example 4 at a speed of about 130 miles per hour (209 km per hour).

Additional tires were built utilizing gum strips which were comprised of the SPBD rubber composition and an undertread gum layer which was also comprised of the rubber composition containing SPBD. Additionally, the tires made were built utilizing shoulder wedges lying under the belt at both edges which were comprised of the rubber composition containing SPBD. Of the three tires built utilizing this procedure, one failed at 130 miles per hour (209 km per hour) and two failed at 136 miles per hour (219 km per hour). Accordingly, better performance can be realized by utilizing SPBD in both the undertread gum layer and in the gum strip.

Three additional tires were built utilizing the SPBD rubber composition as the rubber for the belts as well as the rubber for the undertread and gum strip. All of the tires built utilizing this procedure failed at 136 miles per hour (219 km per hour). This experiment clearly shows that advantages can be realized by utilizing SPBD containing rubber compositions as the rubber from which belts are comprised. It further shows the advantage of utilizing such compounds in the gum strip, undertread gum layer and in belts.

## Claims

1. A pneumatic rubber tire comprised of a toroidal shaped fabric-reinforced rubber carcass and an outer circumferential rubber tread, two spaced substantially inextensible beads and two sidewalls extending radially from and connecting said tread to said beads, said tire characterized by having a circumferential fabric reinforced rubber belt positioned between said tread and supporting carcass where the rubber of said belt is characterized by being comprised of (A) from 25 to 75 weight percent of a highly dispersed blend of syndiotactic 1,2-polybutadiene in synthetic polyisoprene, wherein said highly dispersed blend contains from 5 weight percent to 40 weight percent syndiotactic 1,2-polybutadiene, and wherein said highly dispersed blend was made by inverse phase polymerization, (B) from 25 to 75 weight percent natural rubber, and (C) from 0 to 40 weight percent polydiene rubbers other than natural rubber.

2. A pneumatic tire comprised of a toroidal shaped fabric-reinforced rubber carcass and an outer circumferential rubber tread, two spaced substantially inextensible beads and two sidewalls extending radially from and connecting said tread to said beads, said tire characterized by having a circumferential fabric reinforced rubber belt positioned between said tread and supporting carcass and an undertread gum layer positioned between said tread and said belt where the undertread gum layer is characterized by being comprised of (A) from 25 to 75 weight percent of a highly dispersed blend of syndiotactic 1,2-polybutadiene in synthetic polyisoprene, wherein said highly dispersed blend contains from 5 weight percent to 40 weight percent syndiotactic 1,2-polybutadiene, and wherein said highly dispersed blend was made by inverse phase polymerization, (B) from 25 to 75 weight percent natural rubber, and (C) from 0 to 40 weight percent polydiene rubbers other than natural rubber.

3. A pneumatic rubber tire comprised of a toroidal shaped fabric-reinforced rubber carcass and an outer circumferential rubber tread, two spaced substantially inextensible beads and two sidewalls extending radially from and connecting said tread to said beads, said tire characterized by having a circumferential fabric reinforced rubber belt positioned between said tread and supporting carcass with gum strips around the edges of the belts where the gum strips are comprised of (A) from 25 to 75 weight percent of a highly dispersed blend of syndiotactic 1,2-polybutadiene in synthetic polyisoprene, wherein said highly dispersed blend contains from 5 weight percent to 40 weight percent syndiotactic 1,2-polybutadiene, and wherein said highly dispersed blend was made by inverse phase polymerization, (B) from 25 to 75 weight percent natural rubber, and (C) from 0 to 40 weight percent polydiene rubbers other than natural rubber.

4. A pneumatic rubber tire as specified in claim 2 characterized in that said undertread gum layer is comprised of from 30 to 70 weight percent of said highly dispersed blend of syndiotactic 1,2-polybutadiene in synthetic polyisoprene.

5. A pneumatic rubber tire as specified in claim 2 characterized in that said undertread gum layer is comprised of from 40 to 60 weight percent of said highly dispersed blend of syndiotactic 1,2-polybutadiene in synthetic polyisoprene.

6. A pneumatic rubber tire as specified in claim 2, 4 or 5 characterized in that the undertread gum layer is comprised of from 30 to 70 weight percent natural rubber.

7. A pneumatic rubber tire as specified in claim 2, 4 or 5 characterized in that the undertread gum layer is comprised of from 40 to 60 weight percent natural rubber.

8. A pneumatic rubber tire as specified in any of the preceding claims characterized in that the highly dispersed blend of syndiotactic 1,2-polybutadiene in synthetic polyisoprene contains from 12 to 25 weight percent syndiotactic 1,2-polybutadiene; and wherein the syndiotactic 1,2-polybutadiene has a melting point of at least 180°C.

9. A pneumatic rubber tire as specified in any of the preceding claims characterized in that the syndiotactic 1,2-polybutadiene has a melting point of at least 200°C.

## Patentansprüche

1. Gummi-Luftreifen, der eine ringförmige Gewebe-verstärkte Kautschukkarkasse und eine außen umlaufende Kautschuklauffläche, zwei mit Zwischenraum angeordnete, im wesentlichen unausdehnbare Wulste und zwei Seitenwände, die sich radial von der Lauffläche erstrecken und diese mit den Wulsten verbinden, umfaßt, wobei der Reifen dadurch gekennzeichnet ist, daß er einen umlaufenden, Gewebeverstärkten Kautschukgürtel, der zwischen der Lauffläche und der tragenden Karkasse positioniert ist, aufweist, worin der Kautschuk des Gürtels dadurch gekennzeichnet ist, daß er umfaßt: (A) 25 bis 75 Gewichtsprozent einer stark dispergierten Mischung von syndiotaktischem 1,2-Polybutadien in synthetischem Polyisopren, worin die stark dispergierte Mischung 5 Gewichtsprozent bis 40 Gewichtsprozent syndiotaktisches 1,2-Polybutadien enthält und worin die stark dispergierte Mischung durch Umkehrphasenpolymerisation hergestellt wurde, (B) 25 bis 75 Gewichtsprozent Naturkautschuk und (C) 0 bis 40 Gewichtsprozent Polydienkautschuke außer Naturkautschuk.

2. Gummi-Luftreifen, der eine ringförmige Gewebe-verstärkte Kautschukkarkasse und eine außen umlaufende Kautschuklauffläche, zwei mit Zwischenraum angeordnete, im wesentlichen unausdehnbare Wulste und zwei Seitenwände, die sich radial von der Lauffläche erstrecken und diese mit den Wulsten verbinden, umfaßt, wobei der Reifen dadurch gekennzeichnet ist, daß er einen umlaufenden, Gewebeverstärkten Kautschukgürtel, der zwischen der Lauffläche und der tragenden Karkasse positioniert ist, und eine Gummi-Laufflächen-Unterschicht, die zwischen der Lauffläche und dem Gürtel positioniert ist, aufweist, worin die Gummi-Laufflächen-Unterschicht dadurch gekennzeichnet ist, daß sie umfaßt: (A) 25 bis 75 Gewichtsprozent einer stark dispergierten Mischung von syndiotaktischem 1,2-Polybutadien in synthetischem Polyisopren, worin die stark dispergierte Mischung 5 Gewichtsprozent bis 40 Gewichtsprozent syndiotaktisches 1,2-Polybutadien enthält und worin die stark dispergierte Mischung durch Umkehrphasenpolymerisation hergestellt wurde, (B) 25 bis 75 Gewichtsprozent Naturkautschuk und (C) 0 bis 40 Gewichtsprozent Polydienkautschuke außer Naturkautschuk.

3. Gummi-Luftreifen, der eine ringförmige Gewebe-verstärkte Kautschukkarkasse und eine außen umlaufende Kautschuklauffläche, zwei mit Zwischenraum angeordnete, im wesentlichen unausdehnbare Wulste und zwei Seitenwände, die sich radial von der Lauffläche erstrecken und diese mit den Wulsten verbinden, umfaßt, wobei der Reifen dadurch gekennzeichnet ist, daß er einen umlaufenden, Gewebeverstärkten Kautschukgürtel, der zwischen der Lauffläche und der tragenden Karkasse positioniert ist, aufweist, wobei sich Gummistreifen um die Ränder der Gürtel herum befinden, worin die Gummistreifen umfassen: (A) 25 bis 75 Gewichtsprozent einer stark dispergierten Mischung von syndiotaktischem 1,2-Polybutadien in synthetischem Polyisopren, worin die stark dispergierte Mischung 5 Gewichtsprozent bis 40 Gewichtsprozent syndiotaktisches 1,2-Polybutadien enthält und worin die stark dispergierte Mischung durch Umkehrphasenpolymerisation hergestellt wurde, (B) 25 bis 75 Gewichtsprozent Naturkautschuk und (C) 0 bis 40 Gewichtsprozent Polydienkautschuke außer Naturkautschuk.

4. Gummi-Luftreifen wie in Anspruch 2 angegeben, dadurch gekennzeichnet, daß die Gummi-Laufflächen-Unterschicht 30 bis 70 Gewichtsprozent der stark dispergierten Mischung von syndiotaktischem 1,2-Polybutadien in synthetischem Polyisopren umfaßt.

5. Gummi-Luftreifen wie in Anspruch 2 angegeben, dadurch gekennzeichnet, daß die Gummi-Laufflächen-Unterschicht 40 bis 60 Gewichtsprozent der stark dispergierten Mischung von syndiotaktischem 1,2-Polybutadien in synthetischem Polyisopren umfaßt.

6. Gummi-Luftreifen wie in Anspruch 2, 4 oder 5 angegeben, dadurch gekennzeichnet, daß die Gummi-Laufflächen-Unterschicht 30 bis 70 Gewichtsprozent Naturkautschuk umfaßt.

7. Gummi-Luftreifen wie in Anspruch 2, 4 oder 5 angegeben, dadurch gekennzeichnet, daß die Gummi-Laufflächen-Unterschicht 40 bis 60 Gewichtsprozent Naturkautschuk umfaßt.

8. Gummi-Luftreifen wie in einem der vorhergehenden Ansprüche angegeben, dadurch gekennzeichnet, daß die stark dispergierte Mischung von 1,2-Polybutadien in synthetischem Polyisopren 12 bis 25 Gewichtsprozent syndiotaktisches 1,2-Polybutadien enthält; und worin das syndiotaktische 1,2-Polybutadien einen Schmelzpunkt von mindestens 180°C aufweist.

9. Gummi-Luftreifen wie in einem der vorhergehenden Ansprüche angegeben, dadurch gekennzeichnet, daß das syndiotaktische 1,2-Polybutadien einen Schmelzpunkt von mindestens 200°C aufweist.

## Revendications

1. Bandage pneumatique en caoutchouc comprenant une carcasse en caoutchouc de forme toroïdale renforcée par du tissu, ainsi qu'une bande de roulement circonférentielle externe en caoutchouc, deux talons espacés essentiellement inextensibles, ainsi que deux flancs s'étendant radialement depuis ladite bande de roulement et reliant cette dernière auxdits talons, ledit bandage pneumatique étant caractérisé par le fait de posséder une ceinture circonférentielle en caoutchouc renforcée par du tissu, positionnée entre ladite bande de roulement et ladite carcasse de support, le caoutchouc de ladite ceinture étant caractérisé par le fait qu'il comprend (A) de 25 à 75 pour cent en poids d'un mélange fortement dispersé de 1,2-polybutadiène syndiotactique dans du polyisoprène synthétique, ledit mélange fortement dispersé contenant de 5 pour cent en poids à 40 pour cent en poids de 1,2-polybutadiène syndiotactique, et ledit mélange fortement dispersé ayant été réalisé par polymérisation en phase inverse, (B) de 25 à 75 pour cent en poids de caoutchouc naturel et (C) de 0 à 40 pour cent en poids de caoutchoucs polydiéniques autres que le caoutchouc naturel.

2. Bandage pneumatique en caoutchouc comprenant une carcasse en caoutchouc de forme toroïdale renforcée par du tissu, ainsi qu'une bande de roulement circonférentielle externe en caoutchouc, deux talons espacés essentiellement inextensibles, ainsi que deux flancs s'étendant radialement depuis ladite bande de roulement et reliant cette dernière auxdits talons, ledit bandage pneumatique étant caractérisé par le fait de posséder une ceinture circonférentielle en caoutchouc renforcée par du tissu, positionnée entre ladite bande de roulement et ladite carcasse de support, ainsi qu'une couche de sous-sculpture en gomme positionnée entre ladite bande de roulement et ladite ceinture, la couche de sous-sculpture en gomme étant caractérisée par le fait qu'il comprend (A) de 25 à 75 pour cent en poids d'un mélange fortement dispersé de 1,2-polybutadiène syndiotactique dans du polyisoprène synthétique, ledit mélange fortement dispersé contenant de 5 pour cent en poids à 40 pour cent en poids de 1,2-polybutadiène syndiotactique, et ledit mélange fortement dispersé ayant été réalisé par polymérisation en phase inverse, (B) de 25 à 75 pour cent en poids de caoutchouc naturel et (C) de 0 à 40 pour cent en poids de caoutchoucs polydiéniques autres que le caoutchouc naturel.

3. Bandage pneumatique en caoutchouc comprenant une carcasse en caoutchouc de forme toroïdale renforcée par du tissu, ainsi qu'une bande de roulement circonférentielle externe en caoutchouc, deux talons espacés essentiellement inextensibles, ainsi que deux flancs s'étendant radialement depuis ladite bande de roulement et reliant cette dernière auxdits talons, ledit bandage pneumatique étant caractérisé par le fait de posséder une ceinture circonférentielle en caoutchouc renforcée par du tissu, positionnée entre ladite bande de roulement et ladite carcasse de support, comportant des bandes de gomme autour des bords des ceintures, les bandes de gomme comprenant (A) de 25 à 75 pour cent en poids d'un mélange fortement dispersé de 1,2-polybutadiène syndiotactique dans du polyisoprène synthétique, ledit mélange fortement dispersé contenant de 5 pour cent en poids à 40 pour cent en poids de 1,2-polybutadiène syndiotactique, et ledit mélange fortement dispersé ayant été réalisé par polymérisation en phase inverse, (B) de 25 à 75 pour cent en poids de caoutchouc naturel et (C) de 0 à 40 pour cent en poids de caoutchoucs polydiéniques autres que le caoutchouc naturel.

4. Bandage pneumatique en caoutchouc tel que spécifié à la revendication 2, caractérisé en ce que ladite couche de sous-sculpture en gomme comprend de 30 à 70 pour cent en poids dudit mélange fortement dispersé de 1,2-polybutadiène syndiotactique dans du polyisoprène synthétique.

5. Bandage pneumatique en caoutchouc tel que spécifié à la revendication 2, caractérisé en ce que ladite couche de sous-sculpture en gomme comprend de 40 à 60% en poids dudit mélange fortement dispersé de 1,2-polybutadiène syndiotactique dans du polyisoprène synthétique.

6. Bandage pneumatique en caoutchouc tel que spécifié à la revendication 2, 4 ou 5, caractérisé en ce que la couche de sous-sculpture en gomme comprend de 30 à 70 pour cent en poids de caoutchouc naturel.

7. Bandage pneumatique en caoutchouc tel que spécifié à la revendication 2, 4 ou 5, caractérisé en ce que la couche de sous-sculpture en gomme comprend de 40 à 60 pour cent en poids de caoutchouc naturel.

8. Bandage pneumatique en caoutchouc tel que spécifié dans l'une quelconque des revendications précédentes, caractérisé en ce que le mélange fortement dispersé de 1,2-polybutadiène syndiotactique dans du polyisoprène synthétique contient de 12 à 25 pour cent en poids de 1,2-polybutadiène syndiotactique, et dans lequel le 1,2-polybutadiène syndiotactique a un point de fusion d'au moins 180°C.

9. Bandage pneumatique en caoutchouc tel que spécifié dans l'une quelconque des revendications précédentes, caractérisé en ce que le 1,2-polybutadiène syndiotactique a un point de fusion d'au moins 200°C.
